# FASCICULE DE BREVET EUROPEEN

(11) **EP 0 500 482 B1**
(45) Date de publication et mention de la délivrance du brevet: **26.07.1995**
(21) Numéro de dépôt: 92420055.3
(22) Date de dépôt: 19.02.1992
(51) Int. Cl.: F16L 15/00

(54) **Revêtement de surface anti-grippage pour moyen d'assemblage de tubes par filetages et procédé de réalisation d'un tel revêtement**
Schmierende Oberflächenbeschichtung für das Aneinanderfügen von Röhren durch Gewinde sowie Herstellungsverfahren für eine solche Beschichtung
Anti-friction coating for threaded connecting tubes and process for manufacturing such a coating

(30) Priorité: 21.02.1991 FR 9102767
(43) Date de publication de la demande: 26.08.1992
(73) Titulaire: Vallourec Oil & Gas, 59620 Aulnoye-Aymeries (FR)
(72) Inventeur: Petelot, Daniel, F-59550 Landrecies (FR); David, François, F-59620 Aulnoye Aymeries (FR)
(74) Mandataire: Desolneux, Jean-Paul Charles

(56) Documents cités:
- GB-A- 2 104 919
- GB-A- 2 195 939

## Description

Le revêtement de surface anti-grippage pour moyen d'assemblage de tubes par filetages qui fait l'objet de l'invention concerne les surfaces des composants mâle et femelle de ce moyen d'assemblage qui viennent, au moins partiellement, au contact les unes des autres lorsqu'on visse le composant mâle dans le composant femelle. Ces surfaces sont essentiellement les zones des filets mâle et femelle qui assurent une liaison mécanique entre les deux composants et de préférence aussi au moins une surface annulaire, de révolution par rapport à l'axe d'un composant qui vient en contact contre la surface annulaire correspondante de l'autre composant. Un serrage suffisant de la liaison par vissage des deux composants l'un par rapport à l'autre permet de réaliser un contact étanche métal-métal entre les surfaces annulaires ainsi mises en contact.

A titre d'exemple d'un tel moyen d'assemblage, le brevet FR 1489013 décrit ainsi un joint d'assemblage pour tubes métalliques par filetages dans ce cas tronconiques qui comporte des surfaces annulaires qui assurent l'étanchéité de l'assemblage lorsqu'elles viennent en contact les unes contres les autres en fin de serrage. Dans le cas du moyen d'assemblage représenté aux figures 3 et 4 de ce brevet FR 1489013, le composant mâle 1 comporte, à son extrémité frontale, une surface tronconique concave 3, de révolution par rapport à l'axe du composant qui vient en appui contre l'épaulement tronconique convexe 7 du composant femelle 5, également de révolution par rapport à l'axe de ce composant femelle 5. De plus l'arête chanfreinée, formant la surface annulaire tronconique convexe 4a du composant mâle 1, vient en appui étanche contre la surface annulaire tronconique concave 8 du composant femelle 5. Ce brevet FR 1489013 ne décrit pas de moyens particuliers permettant d'éviter le grippage lors du vissage et serrage de ces surfaces annulaires prévues pour assurer une liaison étanche entre les deux composants du moyen d'assemblage. Dans bien des cas, un lubrifiant adapté, tel qu'une graisse composite ("compound grease") normalisée par l'American Petroleum Institute, permet d'éviter ce grippage. Souvent un traitement de surface préalable des composants de la jonction tel qu'un traitement de phosphatation favorise le mouillage des parois des composants par le lubrifiant.

Par ailleurs des phénomènes de grippage peuvent également se produire au niveau des filetages dans les zones où le filetage mâle et le filetage femelle sont en appui l'un sur l'autre, notamment dans le cas des surfaces frettantes en particulier dans le cas des filetages tronconiques.

Les lubrifiants utilisés sont en général insuffisants pour de nombreuses applications. C'est en particulier le cas des moyens d' assemblage de tubes réalisés en des aciers inoxydables ou réfractaires ou encore en des alliages inoxydables ou réfractaires, tels que par exemple des alliages à base de nickel, pour lesquels une lubrification est insuffisante pour asssurer une liaison étanche sans risques de grippage. Ces aciers ou ces alliages ne peuvent pas subir de traitements de phosphatation ce qui ne permet pas d'accroître l'efficacité de la lubrification.

Le brevet GB 2 104 919 décrit un traitement qui permet d'améliorer la résistance au grippage des jonctions filetées des tubes en acier allié à haute teneur en chrome utilisés dans les puits de pétrole.

Selon ce document au moins une partie de la zone d'étanchéité de la jonction est revêtue d'une couche d'activation d'un métal du groupe comprenant Fe, Ni, Zn, Co, Cu, Mn, Cr ou d'un alliage contenant au moins un métal de ce groupe sur laquelle on dépose par électrolyse une couche d'un métal du groupe comprenant Fe, Cu, Zn, Cr, Ni ou d'un alliage contenant au moins un métal de ce groupe. On assure une liaison efficace entre la couche d'activation et la surface d'acier en soumettant celle-ci à une électrolyse anodique en solution acide contenant des ions halogénures puis à une électrolyse cathodique

Le revêtement ainsi réalisé, tel que, par exemple, un revêtement de cuivre, est connu comme permettant d'améliorer la résistance au grippage, en particulier lorsqu'on utilise comme lubrifiant des graisses composites (compound grease).

Par ailleurs, l'utilisation de lubrifiants tels que les graisses composites ("compound grease") n'est pas sans inconvénients. Il est en effet difficile de les répartir correctement sur toute la surface des moyens d'assemblage et on est conduit à en mettre trop dans certaines zones et pas assez ou pas du tout dans d'autres. Ces lubrifiants tendent de plus à fixer des corps étrangers solides en plus des particules qui sont déjà en suspension dans ces mélanges, corps solides qui peuvent faire obstacle au serrage étanche des composants de l'assemblage. Enfin, au cours de plusieurs cycles de vissage-dévissage des assemblages, les particules solides en suspension dans ces graisses composites ("compound grease") tendent à s'accumuler sur les filets et les surfaces annulaires d'étanchéité.

On a recherché la possibilité de réaliser un revêtement apte à être déposé sur les surfaces, entrant en contact glissant, des composants mâle ou femelle des moyens d'assemblage de tubes par filetage qui permette la mise en oeuvre de ce moyen d'assemblage sans utiliser un lubrifiant du type graisse composite ("compound grease"), ces filetages pouvant être tronconiques ou non, par exemple cylindriques. On a recherché aussi la possibilité de réaliser ce revêtement aussi bien sur des moyens d'assemblage de tubes en acier au carbone que sur des moyens d'assemblage de tubes en acier inoxydable ou réfractaire ou encore en alliages inoxydables ou réfractaires tel que par exemple des alliages à base de nickel.

On a recherché plus particulièrement la possibilité de réaliser un tel revêtement dont l'état de surface permette un glissement facile des surfaces des composants mâle et femelle de l'assemblage, même sous la pression élevée qui correspond à la phase de serrage en fin de vissage. On a recherché aussi à obtenir ainsi une bonne étanchéité au niveau des surfaces annulaires quelle que soit leur forme de contact prévues pour assurer cette étanchéité. On a recherché enfin la possibilité de réaliser un tel revêtement qui soit apte à supporter un certain nombre de cycles de vissage-dévissage de l'assemblage, sans grippage ou décollements ou arrachements, en particulier au niveau des surfaces annulaires d'étanchéité et sans perte d'étanchéité.

Le revêtement de surface anti-grippage, pour moyen d'assemblage de tubes par filetages qui fait l'objet de l'invention, permet d'atteindre ces résultats.

Ce revêtement est constitué par une couche mince à base d'oxyde de plomb accrochée à une couche intermédiaire d'un métal non ferreux elle-même reliée, de façon directe ou indirecte, aux surfaces qu'il s'agit de protéger. L'épaisseur de cette couche d'oxyde de plomb est d'environ 2 à 35 » m. Cette couche peut être composée d'oxyde de plomb pur mais elle peut aussi contenir jusqu'à 30 % d'un ou plusieurs oxydes d'autres métaux, tels que l'étain et le zinc.

La couche intermédiaire est constituée par au moins un métal du groupe comprenant cuivre, nickel, chrome à une épaisseur d'environ 1 à 30 » m. De préférence, cette couche intermédiaire est elle-même reliée à la surface du composant qu'il s'agit de protéger par une couche d'accrochage. Cette couche d'accrochage est de préférence une couche de nickel d'environ 0,1 à 5 » m d'épaisseur.

Ce revêtement est appliqué sur au moins une surface annulaire d'étanchéité de l'un des deux composants d'un moyen d'assemblage pour tubes par filetages, ces filetages pouvant être tronconiques ou non, surface annulaire d'étanchéité qui peut être de forme très diverse et qui est prévue pour coopérer avec une surface correspondante de l'autre composant. Ce revêtement peut également être appliqué sur une ou plusieurs autres surfaces annulaires du même composant et peut aussi être appliqué sur le filetage de ce composant. On peut aussi appliquer ce revêtement sur les deux composants du moyen d'assemblage.

L'invention a également pour objet un composant mâle ou femelle d'un moyen d'assemblage de tubes par filetages comportant sur au moins une partie de ses surfaces aptes à venir en contact glissant avec les surfaces correspondantes de l'autre composant un revêtement anti-grippage suivant l'invention ainsi que le moyen d'assemblage de tube correspondant comprenant le composant mâle et le composant femelle comportant un tel revêtement anti-grippage.

L'invention concerne aussi un procédé de réalisation d'un revêtement anti-grippage sur au moins une surface d'un composant d'un moyen d'assemblage de tubes par filetages, surface apte à venir en contact glissant avec une surface correspondante de l'autre composant. Ce procédé qui comporte les caractéristiques de la revendication 10, consiste à déposer par un moyen connu, de façon directe ou indirecte, sur la surface du composant une couche métallique intermédiaire d'au moins un métal du groupe comprenant cuivre, nickel, chrome d'une épaisseur d'environ 1 à 30 » m. On effectue ensuite, sur cette couche intermédiaire un dépôt d'une couche métallique à base de plomb, d'environ 2 à 30 » m d'épaisseur, par un procédé connu tel que l'électrolyse. On effectue ensuite une oxydation du plomb en oxyde de plomb en portant la couche à base de plomb à une température comprise entre environ 100 et 350° C pendant environ 1 à 10h en atmosphère oxydante contenant au moins 5 % d'oxygène.

La couche à base d'oxyde de plomb peut contenir en outre au maximum 30% au total d'un ou plusieurs oxydes métalliques résultant de l'oxydation de métaux tels que l'étain ou le zinc contenus dans la couche de plomb initialement déposée. L'épaisseur de la couche à base d'oxyde de plomb ainsi obtenue est comprise entre environ 2 et environ 35 » m. Avant le dépôt de la couche métallique intermédiaire, on effectue avantageusement le dépôt d'une couche d'accrochage d'un métal tel que le nickel d'une épaisseur d'environ 0,1 à 5 » m. Ce dépôt peut être effectué par tout moyen connu tel que l'électrolyse ou le déplacement chimique à partir d'une solution acide d'un de ses sels. Ce dépôt d'une couche d'accrochage est avantageusement précédé d'un traitement d'activation de la surface du composant par un procédé connu tel qu'une attaque chimique, une attaque par dissolution anodique ou autre.

On applique de façon particulièrement avantageuse le procédé suivant l'invention à la réalisation du revêtement anti-grippage, également suivant l'invention, sur au moins une surface annulaire de contact d'un seul composant d'un moyen d'assemblage, l'expérience ayant montré que la couche à base d'oxyde de plomb permet de réaliser, par contact glissant, une liaison non grippante avec la surface annulaire correspondante de l'autre composant, celle-ci se trouvant à l'état brut d'usinage et sans faire appel à une quelconque lubrification du type graisse composite ("compound grease"). Le revêtement ainsi réalisé permet d'effectuer plusieurs cycles de vissage-dévissage sans perte d'étanchéité au niveau de cette surface annulaire.

Il est ainsi possible d'appliquer le procédé suivant l'invention à la réalisation du revêtement anti-grippage également suivant l'invention à des tronçons de tubes métalliques de faible longueur munis des composants femelles des moyens d'assemblage par filetages à leurs deux extrémités et utilisés pour la réalisation de colonnes de tubes de grande longueur, les tubes étant alors munis à chacune de leurs deux extrémités des composants mâles correspondant à ces composants femelles. Chacun de ces tronçons de tube joue le rôle de manchon d'accouplement et comporte des revêtements anti-grippage suivant l'invention réalisés sur toute leur surface ou sur seulement l'ensemble des surfaces destinées à glisser sur des surfaces mâles correspondantes ou bien sur au moins une surface annulaire d'étanchéité de chacun des deux composants femelles du moyen d'assemblage, les deux composants mâles correspondants situés aux extrémités des tubes qu'il s'agit d'assembler pouvant être utilisés à l'état brut d'usinage ou bien être pourvus également du revêtement anti-grippage suivant l'invention.

Comme cela a été indiqué plus haut on peut réaliser le revêtement suivant l'invention sur toutes les surfaces d'au moins un composant du moyen d'assemblage qui viennent au contact des surfaces correspondantes de l'autre composant. C'est le cas des zones annulaires et en particulier de celles qui assurent l'étanchéité et c'est aussi le cas des zones filetées. On peut aussi limiter le revêtement à des surfaces déterminées en recouvrant les surfaces à conserver telles quelles d'une couche protectrice qu'on enlève après réalisation du revêtement.

L'exemple et les figures ci-après décrivent, de façon non limitative, un exemple de mise en oeuvre du procédé suivant l'invention afin de réaliser le revêtement également suivant l'invention.

La figure 1 est une vue schématique, partielle et en coupe des composants mâle et femelle d'un moyen d'assemblage de tubes auquel est appliquée l'invention pour la réalisation d'une colonne de tubes métalliques.

La figure 2 est une vue considérablement agrandie du revêtement suivant l'invention qui recouvre les deux surfaces annulaires d'étanchéité adjacentes du composant femelle suivant l'invention.

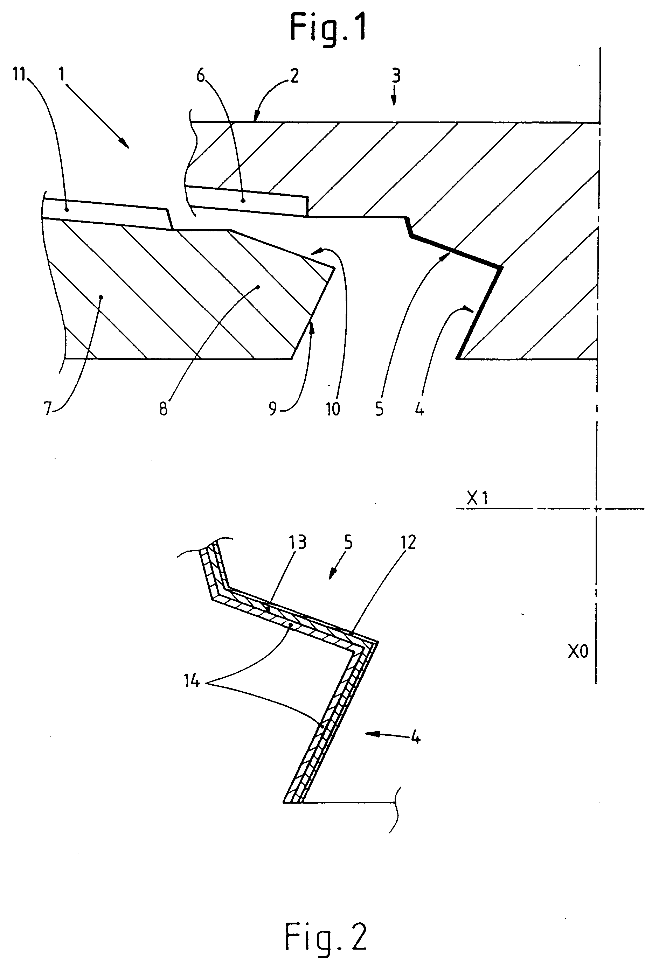

La figure 1 est une vue schématique partielle d'un moyen d'assemblage de tubes métalliques par filetage tronconique utilisé pour la réalisation d'une colonne de tubes. Ce moyen d'assemblage 1 comporte un composant femelle 2 réalisé à l'une des deux extrémités d'un manchon d'accouplement 3 dont seule la moitié correspondant à ce composant femelle 2 est représentée, l'autre moitié non représentée, située au delà du plan de coupe Xo perpendiculaire au plan de la figure, comportant un deuxième composant femelle symétrique du premier. On voit que seules deux surfaces annulaires de ce composant femelle 2 dont l'axe est l'axe X1 du manchon sont représentées par leurs génératrices 4, 5. Seule la zone d'extrémité 6, de faible diamètre, du filetage tronconique femelle est représentée. Le composant mâle 7 constitue l'extrémité d'un tube de grande longueur non représenté. Ce composant mâle comporte une zone d'extrémité frontale 8 qui est pourvue de deux surfaces annulaires dont les génératrices 9, 10 sont disposées de façon telle que ces surfaces viennent au contact des surfaces qui correspondent aux génératrices 4 et 5 du composant femelle 2 quand on assemble les deux composants. Ici les surfaces 5 et 10 sont les surfaces qui assurent l'étanchéité par un contact métal-métal, les surfaces 4 et 9 permettant essentiellement de contrôler le couple de vissage lors de l'assemblage des tubes. Dans le cas de cette figure 1, seules les surfaces tronconiques 4 et 5 respectivement convexes et concaves du manchon 3 ont été recouvertes du revêtement anti-grippage suivant l'invention qui leur permet, après vissage et serrage du filetage tronconique 11 du composant mâle 7 dans le filetage tronconique 6 du composant femelle 2, de venir en contact glissant avec les surfaces tronconiques 9 et 10 respectivement concaves et convexes du composant mâle 7 en assurant l'étanchéité à sec sans grippage. On constate que, même dans le cas où le composant mâle 7 est comme le composant femelle en un acier inoxydable à 13 % de chrome, tel qu'un acier type 420 (norme AISI), ce composant mâle peut être vissé à sec c'est-à-dire sans lubrifiant du type graisse composite ("compound grease") sur les zones 9 et 10 brutes d'usinage correspondant aux zones 4 et 5 traitées selon l'invention du composant 2, sans grippage et sans perte d'étanchéité, même après exécution d'une dizaine de cycles de vissage-dévissage dans des conditions sévères c'est-à-dire avec des interférences ou forces de frottement entre composant mâle et femelle élevées.

Dans la plupart des cas, en pratique, on réalisera en général le revêtement anti-grippage suivant l'invention non seulement sur la ou les surfaces annulaires d'au moins un composant de l'assemblage mais aussi sur le filetage d'au moins un composant. Dans la pratique on recouvre alors toute la surface intérieure du composant femelle 2 ou éventuellement extérieure du composant mâle 7, bien que, en fait, au niveau des filetages, seuls les flancs actifs c'est-à-dire en contact entre eux des filetages mâle ou femelle aient besoin d'être recouverts d'un revêtement anti-grippage. Enfin, il peut être envisagé dans certains cas difficiles de recouvrir du revêtement anti-grippage à la fois les surfaces des composants mâle et femelle du moyen d'assemblage.

Les qualités de tenue à des cycles relativement nombreux de vissage-dévissage du revêtement anti-grippage -suivant l'invention dépendent, pour une part importante, du soin apporté à l'exécution du procédé suivant l'invention.

On précise ci-après les conditions d'exécution du revêtement réalisé sur les surfaces tronconiques 4 et 5 du composant femelle 2 de la figure 1, la figure 2 faisant apparaître de façon schématique et fortement grossie les couches qui composent ce revêtement.

Le procédé est mis en oeuvre sur les deux composants femelles du manchon 3 après mise en place provisoire de chemises de protection en élastomère sur les zones filetées et aussi sur la paroi extérieure du manchon.

Le procéde dans un exemple de réalisation comporte les étapes suivantes :
1°) Réalisation d'une couche d'accrochage de nickel en immergeant le manchon dans un bain d'électrolyse contenant :

| | |
|---|---|
| - sulfate de nickel | 290 g/l |
| - chlorure de nickel | 30 g/l |
| - acide borique | 36 g/l |

L'électrolyse est effectuée à température ambiante avec une densité de courant de 1A/dm2 pendant environ 3 mn entre une anode en nickel et le manchon. L'épaisseur de la couche d'accrochage 12 de nickel obtenue sur les surfaces tronconiques 4 et 5 est d'environ 0,6 » m.
2°) Réalisation d'une couche intermédiaire de cuivre au moyen d'un bain d'électrolyse contenant :

| | |
|---|---|
| - sulfate de cuivre | 200 g/l |
| - acide sulfurique | 50 g/l |

L'électrolyse est effectuée à température ambiante avec une densité de courant de 3 A/dm2 pendant environ 34 min.
L'épaisseur de la couche 13 de cuivre obtenue est d'environ 20 » m.
3°) Réalisation d'une couche de plomb au moyen d'un bain d'électrolyse contenant :

| | |
|---|---|
| - fluoborate de plomb | 90 g/l |
| - acide borique | 25 g/l |
| - acide fluoborique | 100 g/l |

densité de courant 3,2 A/dm2 pendant 15 minutes.
4°) Oxydation de la couche de plomb par chauffage à 200° C pendant 4 h en atmosphère d'air renouvelée pour obtenir l'oxydation de la couche de plomb en oxyde de plomb Pb O. L'épaisseur de la couche 14 d'oxyde de plomb obtenue est d'environ 15 » m.

On constate que cette couche 14 d'oxyde de plomb est dans ces conditions parfaitement adhérente et surtout forme une couche de contact qui permet d'assurer un serrage étanche par vissage du composant mâle 7 brut d'usinage et sans lubrification des zones recouvertes d'oxyde de plomb dans ce composant femelle 2 du moyen d'assemblage 1. De plus, le revêtement anti-grippage ainsi réalisé permet d'effectuer au moins dix cycles de vissage-dévissage sans détection de phénomène de grippage, l'étanchéité étant assurée dans des conditions normales.

Le procédé suivant l'invention peut être mis en oeuvre dans une très grande variété de conditions opératoires. En particulier la couche d'accrochage 12 de nickel peut être réalisée par voie chimique par exemple en mettant les surfaces à recouvrir au contact d'un bain acide contenant un sel de nickel. On peut réaliser la couche intermédiaire 13 par dépôt d'un autre métal que le cuivre, tel que le nickel ou le chrome. On peut aussi utiliser pour ce dépôt un autre procédé que l'électrolyse ou encore des bains d'électrolyse de composition différente.

Pour le dépôt de la couche de plomb on peut aussi utiliser des bains d'électrolyse de composition différents ou encore faire appel à un autre procédé que l'électrolyse. La transformation de la couche de plomb en une couche 14 d'oxyde de plomb Pb O peut être effectuée par oxydation au moyen d'un gaz tel que l'air enrichi en oxygène en particulier en fin d'oxydation.

Comme cela a été dit plus haut on peut aussi déposer une couche à base de plomb contenant outre du plomb des quantités limitées d'autres éléments tels que l'étain ou le zinc afin que, après oxydation la couche 14 à base d'oxyde de plomb puisse contenir jusqu'à 30 % d'un ou plusieurs oxydes d'autres métaux tels que l'étain et le zinc.

## Revendications

1. Revétement anti-grippage pour moyen d'assemblage (3) pour tubes métalliques (7) par filetages (6, 11), déposé sur la ou les surfaces (4, 5) d'un composant destinées à venir en contact glissant avec la ou les surfaces correspondantes (9, 10) de l'autre composant, une forte contrainte de serrage réalisée par vissage appliquant ces deux surfaces l'une contre l'autre, ce revêtement comportant une couche intermédiaire (13) d'au moins un métal du groupe comprenant le cuivre, le nickel et le chrome, et une couche de contact (14) qui est apte à venir en contact glissant avec la surface correspondante de l'autre composant, caractérisé en ce que la couche de contact (14) contient au moins 70 % d'oxyde de plomb qui recouvre la couche intermédiaire à laquelle elle adhère énergiquement.

2. Revêtement anti-grippage suivant revendication 1 caractérisé en ce que la couche de contact (14) contient de l'oxyde d'étain et/ou de l'oxyde de zinc.

3. Revêtement anti-grippage suivant revendication 1 ou 2 caractérisé en ce que l'épaisseur de la couche de contact (14) à base d'oxyde de plomb est comprise entre 2 et 35 » m.

4. Revêtement anti-grippage suivant l'une des revendications 1 à 3 caractérisé en ce que l'épaisseur de la couche intermédiaire (13) est comprise entre 1 et 30 » m.

5. Revêtement anti-grippage suivant l'une des revendications 1 à 4 caractérisé en ce qu'il comprend une couche d'accrochage (12) entre la couche intermédiaire (13) et la surface (4, 5) du composant (2).

6. Revêtement anti-grippage suivant revendication 5 caractérisé en ce que la couche d'accrochage (12) est une couche de nickel de 0,1 à 5 » m.

7. Revêtement anti-grippage suivant l'une des revendications 1 à 6 caractérisé en ce qu'il recouvre au moins une surface annulaire (4, 5, 9, 10) d'au moins un composant (2, 7).

8. Revêtement anti-grippage suivant revendication 7 caractérisé en ce qu'il recouvre, en plus d'au moins une surface annulaire (4, 5, 9, 10) au moins une partie du filetage (6, 11) d'au moins un composant (2, 7).

9. Revêtement anti-grippage suivant l'une des revendications 1 à 8 caractérisé en ce que les filetages du moyen d'assemblage sont des filetages tronconiques.

10. Procédé de réalisation d'un revêtement anti-grippage pour moyen d'assemblage (3) pour tubes métalliques (7) par filetages (6, 11), déposé sur la ou les surfaces d'un composant destinées à venir en contact glissant avec la ou les surfaces correspondantes de l'autre composant, une forte contrainte de serrage réalisée par vissage appliquant ces deux surfaces l'une contre l'autre, dans lequel on dépose par un moyen connu une couche intermédiaire (13) d'un métal ou alliage métallique du groupe comprenant le cuivre, le nickel et le chrome sur la ou les surfaces, caractérisé en ce qu'on dépose ensuite sur cette couche intermédiaire une couche à base de plomb, puis en ce qu'on oxyde cette couche par chauffage à une température comprise entre 100 et 350° C pendant 1 à 10 heures au moyen d'un gaz contenant de l'oxygène afin de transformer le plomb en oxyde de plomb et à former ainsi une couche contenant au moins 70 % d'oxyde de plomb (14) ayant une parfaite adhérence à la couche intermédiaire (13).

11. Procédé suivant revendication 10 caractérisé en ce qu'on interpose entre la couche intermédiaire (13) et la surface du composant (4, 5, 9, 10) une couche métallique d'accrochage (12) de 0,1 à 5 » m d'épaisseur.

12. Procédé suivant revendication 11 caractérisé en ce qu'on effectue avant le dépôt de la couche métallique d'accrochage (12) un traitement d'activation de la surface du composant (4, 5, 9, 10).

13. Procédé suivant revendication 12 caractérisé en ce que le traitement d'activation est une attaque chimique ou une attaque anodique.

14. Procédé suivant l'une des revendications 10 à 13 caractérisé en ce qu'on réalise la couche intermédiaire (13) et la couche à base de plomb par électrolyse.

15. Procédé suivant l'une des revendications 10 à 14 caractérisé en ce qu'on réalise une couche à base de plomb contenant également de l'étain et/ou de zinc.

16. Moyen d'assemblage pour tubes par filetages caractérisé en ce qu'au moins un des composants mâle ou femelle comporte sur au moins une partie de ses surfaces (4, 5) aptes à venir en contact glissant avec les surfaces correspondantes (9, 10) de l'autre composant un revêtement anti-grippage suivant l'une des revendications 1 à 9.

17. Moyen d'assemblage selon revendication 16 caractérise en ce que les filetages sont tronconiques.

## Claims

1. An anti-seizing coating for an assembly means (3) for metal tubes (7) by threadings (6, 11), deposited on the surface(s) (4, 5) of a component which is/are intended to come into sliding contact with the corresponding surface(s) (9, 10) of the other component, a high tightening stress produced by screwing applying these two surfaces against each other, the coating comprising an intermediate layer (13) of at least one metal from the group comprising copper, nickel and chromium, and a contact layer (14) which is capable of coming into sliding contact with the corresponding surface of the other component, characterised in that the contact layer (14) contains at least 70% lead oxide and covers the intermediate layer to which it strongly adheres.

2. An anti-seizing coating according to Claim 1, characterised in that the contact layer (14) contains tin oxide and/or zinc oxide.

3. An anti-seizing coating according to Claim 1 or Claim 2, characterised in that the lead oxide-based contact layer (14) is between 2 and 35 »m in thickness.

4. An anti-seizing coating according to one of Claims 1 to 3, characterised in that the intermediate layer (13) is between 1 and 30 »m in thickness.

5. An anti-seizing coating according to one of Claims 1 to 4, characterised in that it comprises an attachment layer (12) between the intermediate layer (13) and the surface (4, 5) of the component (2).

6. An anti-seizing coating according to Claim 5, characterised in that the attachment layer (12) is a nickel layer of between 0.1 and 5 »m in thickness.

7. An anti-seizing coating according to one of Claims 1 to 6, characterised in that it covers at least one annular surface (4, 5, 9, 10) of at least one component (2, 7).

8. An anti-seizing coating according to Claim 7, characterised in that in addition to covering at least one annular surface (4, 5, 9, 10) it covers at least part of the threading (6, 11) of at least one component (2, 7).

9. An anti-seizing coating according to one of Claims 1 to 8, characterised in that the threadings of the assembly means are frustoconical threadings.

10. A process for producing an anti-seizing coating for assembly means (3) for metal tubes (7) by threadings (6, 11), deposited on the surface(s) of a component which is/are intended to come into sliding contact with the corresponding surface(s) of the other component, a high tightening stress produced by screwing applying these two surfaces against each other, wherein a known means is used to deposit an intermediate layer (13) of a metal or metal alloy from the group comprising copper, nickel and chromium onto the surface(s), characterised in that a lead-based layer is then deposited onto this intermediate layer, and then this layer is oxidised by heating at a temperature of between 100 and 350°C for 1 to 10 hours by means of a gas containing oxygen in order to convert the lead into lead oxide and in order to thus form a layer which contains at least 70% lead oxide (14) with perfect adhesion to the intermediate layer (13).

11. A process according to Claim 10, characterised in that a metal attachment layer (12) of between 0.1 and 5 »m in thickness is placed between the intermediate layer (13) and the surface of the component (4, 5, 9, 10).

12. A process according to Claim 11, characterised in that before depositing the metal attachment layer (12) an activation treatment is carried out on the surface of the component (4, 5, 9, 10).

13. A process according to Claim 12, characterised in that the activation treatment is chemical attack or anodic attack.

14. A process according to one of Claims 10 to 13, characterised in that the intermediate layer (13) and the lead-based layer are produced by electrolysis.

15. A process according to one of Claims 10 to 14, characterised in that a lead-based layer is produced which also contains tin and/or zinc.

16. An assembly means for tubes by threadings, characterised in that on at least part of its surfaces (4, 5) capable of coming into sliding contact with the corresponding surfaces (9, 10) of the other component at least one of the male or female components comprises an anti-seizing coating according to one of Claims 1 to 9.

17. An assembly means according to Claim 16, characterised in that the threadings are frustoconical.

## Patentansprüche

1. Schmierende Beschichtung für eine Vorrichtung zum Verbinden (3) von Metallrohren (7) durch Gewinde (6, 11), die auf die Oberfläche(n) (4, 5) eines Bestandteils aufgebracht wird, die in Gleitkontakt mit der oder den entsprechenden Oberfläche(n) (9, 10) des anderen Bestandteils kommen sollen, wobei ein hoher, durch Schraubung ausgeübter Zugdruck diese beiden Flächen gegeneinander drückt, wobei diese Beschichtung eine Zwischenschicht (13) aus mindestens einem Metall aus der aus Kupfer, Nickel und Chrom gebildeten Gruppe und eine Kontaktschicht (14) aufweist, die geeignet ist, mit der entsprechenden Oberfläche des anderen Bestandteils in Gleitkontakt zu treten, dadurch gekennzeichnet, daß die Kontaktschicht (14) mindestens 70 % Bleioxyd enthält und die Zwischenschicht bedeckt, an der sie fest haftet.

2. Schmierende Beschichtung nach Anspruch 1, dadurch gekennzeichnet, daß die Kontaktschicht (14) Zinnoxyd und/oder Zinkoxyd enthält.

3. Schmierende Beschichtung nach Anspruch 1 oder 2, dadurch gekennzeichnet, daß die Kontaktschicht (14) auf Bleioxydbasis 2 bis 35 »m dick ist.

4. Schmierende Beschichtung nach einem der Ansprüche 1 bis 3, dadurch gekennzeichnet, daß die Zwischenschicht (13) 1 bis 30 »m dick ist.

5. Schmierende Beschichtung nach einem der Ansprüche 1 bis 4, dadurch gekennzeichnet, daß sie zwischen der Zwischenschicht (13) und der Oberfläche (4, 5) des Bestandteils (2) eine Befestigungsschicht (12) aufweist.

6. Schmierende Beschichtung nach Anspruch 5, dadurch gekennzeichnet, daß die Befestigungsschicht (12) eine Schicht aus Nickel mit 0,1 bis 5 »m Stärke ist.

7. Schmierende Beschichtung nach einem der Ansprüche 1 bis 6, dadurch gekennzeichnet, daß sie mindestens eine ringförmige Fläche (4, 5, 9, 10) mindestens eines Bestandteils (2, 7) bedeckt.

8. Schmierende Beschichtung nach Anspruch 7, dadurch gekennzeichnet, daß sie außerdem zusätzlich von mindestens einer ringförmigen Fläche (4, 5, 9, 10) mindestens einen Teil des Gewindes (6, 11) mindestens eines Bestandteils (2, 7) bedeckt.

9. Schmierende Beschichtung nach einem der Ansprüche 1 bis 8, dadurch gekennzeichnet, daß die Gewinde der Vorrichtung zum Zusammenfügen kegelstumpfförmig sind.

10. Verfahren zur Herstellung einer schmierenden Beschichtung für eine Vorrichtung zum Verbinden (3) von Metallrohren (7) durch Gewinde (6, 11), die auf die Oberfläche(n) (4, 5) eines Bestandteils aufgebracht wird, die in Gleitkontakt mit der oder den entsprechenden Oberfläche(n) (9, 10) des anderen Bestandteils kommen sollen, wobei ein hoher, durch Schraubung ausgeübter Zugdruck diese beiden Flächen gegeneinander drückt, bei dem mit einer bekannten Vorrichtung eine Zwischenschicht (13) eines Metalls oder einer Metallegierung aus der aus Kupfer, Nickel und Chrom gebildeten Gruppe auf die Oberfläche(n) aufgebracht wird, dadurch gekennzeichnet, daß man anschließend auf diese Zwischenschicht eine Schicht auf Bleibasis aufbringt, und daß man diese Schicht durch Erhitzung auf eine Temperatur von 100 bis 350° während einer bis 10 Stunden mittels eines sauerstoffhaltigen Gases oxidiert, um das Blei in Bleioxid umzuwandeln und so eine Schicht zu bilden, die mindestens 70 % Bleioxyd (14) enthält, die hervorragend an der Zwischenschicht (13) haftet.

11. Verfahren nach Anspruch 10, dadurch gekennzeichnet, daß man zwischen der Zwischenschicht (13) und der Oberfläche des Bestandteils (4, 5, 9, 10) eine Befestigungsschicht (12) aus Metall mit einer Dicke von 0,1 bis 5 »m vorsieht.

12. Verfahren nach Anspruch 11, dadurch gekennzeichnet, daß man vor dem Aufbringen der Befestigungsschicht (12) aus Metall eine Aktivierungsbehandlung der Oberfläche des Bestandteils (4, 5, 9, 10) vornimmt.

13. Verfahren nach Anspruch 12, dadurch gekennzeichnet, daß die Aktivierungsbehandlung in einem chemischen oder anodischen Angriff besteht.

14. Verfahren nach einem der Ansprüche 10 bis 13, dadurch gekennzeichnet, daß die Zwischenschicht (13) und die Schicht auf Bleibasis durch Elektrolyse hergestellt werden.

15. Verfahren nach einem der Ansprüche 10 bis 14, dadurch gekennzeichnet, daß man eine Schicht auf Bleibasis herstellt, die ebenfalls Zinn und/oder Zink enthält.

16. Vorrichtung zum Aneinanderfügen von Rohren durch Gewinde, dadurch gekennzeichnet, daß mindestens einer der zusammenpassenden Bestandteile auf mindestens einem Teil seiner Oberflächen (4, 5), die geeignet sind, in Gleitkontakt mit den entsprechenden Oberflächen des anderen Bestandteils zu treten, eine schmierende Beschichtung nach einem der Ansprüche 1 bis 9 aufweist.

17. Vorrichtung zum Aneinanderfügen nach Anspruch 16, dadurch gekennzeichnet, daß die Gewinde kegelstumpfförmig sind.
